# EUROPÄISCHE PATENTSCHRIFT

(11) **EP 2 215 497 B1**
(45) Veröffentlichungstag und Bekanntmachung des Hinweises auf die Patenterteilung: **17.08.2016**
(21) Anmeldenummer: 08804613.1
(22) Anmeldetag: 23.09.2008
(51) Int. Cl.: G01S 13/42, G01S 13/93, H01Q 3/14, H01Q 19/06

(54) **WINKELAUFLÖSENDER RADARSENSOR**
ANGLE RESOLVING RADAR SENSOR
CAPTEUR RADAR À RÉSOLUTION ANGULAIRE

(30) Priorität: 22.11.2007 DE 102007056329
(43) Veröffentlichungstag der Anmeldung: 11.08.2010
(73) Patentinhaber: Robert Bosch GmbH, 70442 Stuttgart (DE)
(72) Erfinder: BINZER, Thomas, 70565 Stuttgart (DE); WALTER, Thomas, 71272 Renningen (DE)
(86) Internationale Anmeldenummer: PCT/EP2008/062698
(87) Internationale Veröffentlichungsnummer: WO 2009/065651

(56) Entgegenhaltungen:
- EP-A- 0 971 436
- EP-A- 1 684 092
- WO-A-01/47062
- WO-A-2008/006656
- DE-A1- 10 355 796

## Beschreibung

### Stand der Technik

Die Erfindung betrifft einen winkelauflösenden Radarsensor mit einer optischen Linse und wenigstens einem in Abstand zu der Linse angeordneten Antennenelement, das relativ zu der Linse in einer Richtung quer zur optischen Achse der Linse beweglich ist, und mit einer Steuereinrichtung zur Steuerung der Position des Antennenelements.

Radarsensoren dieser Art werden beispielsweise in Verbindung mit Fahrerassistenzsystemen für Kraftfahrzeuge eingesetzt und dienen dann insbesondere zur Ortung von vorausfahrenden Fahrzeugen oder sonstigen Hindernissen, um beispielsweise eine automatische Abstandsregelung (ACC; Adaptive Cruise Control) zu ermöglichen oder im Rahmen eines prädiktiven Sicherheitssystems (PSS) eine akute Kollisionsgefahr zu erkennen.

Das Winkelauflösungsvermögen des Radarsensors erlaubt es, auch die Azimutwinkel der georteten Objekte zu messen, so daß man letztlich ein zweidimensionales Bild der Verkehrssituation erhält.

Bei bekannten winkelauflösenden Radarsensoren für Fahrerassistenzsysteme sind mehrere, beispielsweise vier, Antennenelemente seitlich versetzt zur optischen Achse der Linse angeordnet, so daß jedes Antennenelement Radarstrahlung in einer etwas anderen Vorzugsrichtung aussendet und/oder aus einer anderen Vorzugsrichtung empfängt. Die empfangenen Signale werden in getrennten Kanälen ausgewertet, und durch Vergleich der Amplituden und Phasen der Signale, die in den verschiedenen Kanälen von dem selben Objekt erhalten werden, läßt sich dann der Azimutwinkel des Objekts bestimmen.

In bestimmten Situationen, beispielsweise bei Fahrten auf einer engen, durch Leitplanken begrenzten Straße oder bei einer Fahrt durch eine Gasse zwischen stehenden Fahrzeugen auf der linken und rechten Nebenspur, erweist es sich jedoch als Nachteil, daß sich der Ortungsbereich des bekannten Radarsensors über einen relativ großen Winkelbereich erstreckt, so daß eine große Anzahl von Störsignalen von irrelevanten Objekten rechts und links des eigenen Fahrkorridors empfangen werden, die zu einer Erhöhung des Rauschpegels führen und eine korrekte und präzise Auswertung der wirklich wichtigen Signale erschweren.

Neben Radarsensoren, bei denen die Radarstrahlung durch eine Mikrowellenlinse gebündelt wird, sind auch Radarsensoren mit einer sogenannten Phased Array Antenne bekannt, die eine Vielzahl von Antennenelementen (Patches) aufweisen, die mit Signalen angesteuert werden, zwischen denen eine solche Phasenbeziehung besteht, daß sich durch Interferenz die gewünschte Bündelung und Richtcharakteristik des Radarstrahls ergibt. Nachteilig ist jedoch die hohe Komplexität in der Anordnung und Ansteuerung des Phased Array.

Schließlich sind auch "scannende" Radarsensoren bekannt, bei denen mit Hilfe eines einzigen, auf der optischen Achse der Linse angeordneten Antennenelements eine relativ scharf gebündelte Radarkeule erzeugt wird. Zur Messung der Azimutwinkel wird dann der Radarsensor als Ganzes mechanisch im Azimut verschwenkt. In diesem Fall wird jedoch durch die Schwenkmechanik eine hinreichend präzise und stabile Justierung des Radarsensors erschwert, und außerdem kann die mechanische Schwenkbewegung nur mit relativ kleiner Frequenz ausgeführt werden, so daß für eine vollständige Abtastung des gesamten Ortungswinkelbereiches relativ viel Zeit benötigt wird.

Aus EP-A-0 971 436 ist ein Radarsensor nach dem Oberbegriff des Anspruchs 1 bekannt.

### Offenbarung der Erfindung

Aufgabe der Erfindung ist es, einen winkelauflösenden Radarsensor zu schaffen, insbesondere für Fahrerassistenzsysteme in Kraftfahrzeugen, der bei einfachem Aufbau eine einfache Steuerung der Richtcharakteristik und eine hohe Winkelauflösung ermöglicht.

Diese Aufgabe wird erfindungsgemäß dadurch gelöst, daß das wenigstens eine Antennenelement gemeinsam mit einem zugehörigen Hochfrequenzmodul, das einen Oszillator und einen Mischer enthält, in der Richtung quer zur optischen Achse der Linse bewegbar ist.

Bei dem erfindungsgemäßen Radarsensor werden durch die mechanische Bewegung des Antennenelements relativ zu der optischen Linse die Haupt-Abstrahlrichtung (im Fall einer Sendeantenne), die Haupt-Empfindlichkeitsrichtung (im Fall einer Empfangsantenne) bzw. beide Richtungen (im Falle einer kombinierten Sende- und Empfangsantenne) ähnlich wie bei einem scannenden Radarsensor variiert. Der Vorteil besteht jedoch darin, daß die Linse und die gesamte mechanische Montierung des Radarsensors dabei stationär bleiben und nur relativ kleinbauende elektronische Komponenten im Inneren des Radarsensors, nämlich das Antennenelement oder die Antennenelemente und ein Teil der zugehörigen Elektronik, mechanisch bewegt werden. Dies erlaubt die Verwendung eines kleinbauenden, einfachen und zuverlässigen mechanischen Antriebs sowie eine einfache Steuerung der Bewegung und überdies, aufgrund der geringen trägen Masse der bewegten Komponenten, eine hohe Abtastfrequenz.

Besonders vorteilhaft ist dabei, daß der Winkelbereich, in dem die Radarkeule verschwenkt wird, sich auf sehr einfache Weise je nach Situation variieren läßt. So kann beispielsweise bei einer Gassenfahrt der Winkelbereich eingegrenzt werden, so daß man weniger störende Signale von den linken und rechten Begrenzungen der Gasse empfängt. Ebenso kann bei einer Fahrt auf der rechten Spur einer mehrspurigen Fahrbahn die Radarkeule asymmetrisch verschwenkt werden, also weiter zur linken Seite (in Richtung Fahrbahn) und weniger weit zum Fahrbahnrand auf der rechten Seite. Bei einer Kurvenfahrt läßt sich der Schwenkbereich an die voraussichtliche Krümmung des Fahrkurses anpassen, so daß vorausfahrende Fahrzeuge nicht aus dem Ortungsbereich verlorengehen.

Das Winkelauflösungsvermögen wird zumindest zum Teil dadurch erreicht, daß die Auswertung des empfangenen Signals mit der mechanischen Oszillation des Antennenelements oder der Antennenelemente synchronisiert wird. Die Abtastfrequenz, d. h. die Frequenz der mechanischen Oszillation, kann dabei so hoch gewählt werden, daß die Phase des gesendeten Radarsignals mindestens für die Dauer einer kompletten Abtastperiode stabil bleibt, so daß wie bei einem herkömmlichen Radarsensor mit mehreren Antennenelementen eine hohe Winkelauflösung dadurch erreicht werden kann, daß die Phasenbeziehungen zwischen den in verschiedenen Positionen des Antennenelements empfangenen Signalen ausgewertet werden.

Das Antennenelement oder die Antennenelemente und das Hochfrequenzmodul zum Erzeugen des gesendeten Hochfrequenzsignals und zum Heruntermischen des empfangenen Signals in ein Zwischenfrequenzband sind in eine gemeinsame Einheit integriert. Zwischen dem beweglichen Hochfrequenzmodul und den stationären Teilen der Elektronik brauchen lediglich Steuersignale sowie das erwähnte Zwischenfrequenzsignal übertragen zu werden. Dies kann beispielsweise mittels flexibler Leitungen, mittels Schleifkontakten oder ggf. auch induktiv geschehen.

Die Erfindung ist dabei nicht auf Radarsensoren mit einem einzigen Antennenelement beschränkt, sondern kann auch bei Sensoren mit mehreren Antennenelementen eingesetzt werden, bei denen dann durch einen Vergleich der Phasen und Amplituden der Signale der mehreren Antennenelemente eine noch höhere Winkelauflösung erreicht werden kann.

Vorteilhafte Ausgestaltungen und Weiterbildungen der Erfindung sind in den Unteransprüchen angegeben.

Als Antrieb zum Bewegen des Antennenelements oder der Antennenelemente kann ein Linearmotor eingesetzt werden, beispielsweise ein piezoelektrischer Linearmotor, wie er in EP 1 267 478 A2 beschrieben wird. Dieser Linearmotor läßt sich beispielsweise auf einer Platine des Radarsensors anordnen, die auch einen Teil der elektronischen Komponenten zur Erzeugung und/oder Auswertung des Radarsignals trägt.

In einer bevorzugten Ausführungsform ist der Radarsensor ein sogenanntes FMCW-Radar (Frequency Modulated Continuous Wave), bei dem das Radarsignal kontinuierlich gesendet wird, jedoch mit einer rampenförmig modulierten Frequenz. Das empfangene Signal wird dann mit einem Teil des gesendeten Signals gemischt, so daß man ein Zwischenfrequenzsignal erhält, dessen Frequenz dem Frequenzunterschied zwischen dem gesendeten und dem empfangenen Signal entspricht. Dieser Frequenzunterschied ist aufgrund der Modulation der gesendeten Frequenz zum einen von der Signallaufzeit und damit vom Abstand des Objekts abhängig, zum anderen jedoch auch - aufgrund der Doppler-Verschiebung - auch von der Relativgeschwindigkeit des Objekts. Durch Auswertung der Signale von mehreren Frequenzrampen mit unterschiedlicher Steigung lassen sich dann Mehrdeutigkeiten beseitigen, so daß man - ggf. auch für mehrere Objekte - jeweils einen eindeutigen Wert für den Abstand und die Relativgeschwindigkeit erhält. Das Zwischenfrequenzsignal wird digitalisiert und jeweils über eine gewisse Zeitspanne gesammelt ("gesampelt") und dann durch Schnelle Fourier-Transformation in ein Spektrum zerlegt, in dem sich dann jedes geortete Objekt durch einen Peak bei einer von dem Abstand und der Relativgeschwindigkeit abhängigen Frequenz abzeichnet.

In einer vorteilhaften Ausführungsform wird jede Abtast-Halbperiode, d. h. die Zeitspanne, in welcher das Antennenelement eine vollständige Abtastbewegung von einer Endlage zur entgegengesetzten Endlage ausführt, in mehrere zeitlich aufeinanderfolgende Phasen unterteilt, und in jeder Phase wird in einen anderen Kanal der Auswerteschaltung gesampelt, so daß sich die über die jeweilige Phase gemittelte Position des Antennenelements von Kanal zu Kanal unterscheidet und folglich der Azimutwinkel durch Auswertung der Amplituden und/oder Phasenbeziehungen zwischen den verschiedenen Kanälen bestimmt werden kann. Eine vollständige Sampling-Periode kann dabei auch mehrere Abtast-Halbperioden umfassen, wobei die Phasen, in denen in einen bestimmten Kanal Daten gesampelt wird, durch Pausen getrennt sind, in denen in andere Kanälen gesampelt wird.

Vorzugsweise ist die Abtast-Halbperiode auch kleiner als die Dauer einer Frequenzrampe für die Modulation des gesendeten Signals. Damit ist sichergestellt, daß jeder Kanal innerhalb jeder Frequenzrampe mindestens eine Phase hat, in der Daten gesampelt werden.

Die mechanische Bewegung des Antennenelements kann dabei schrittweise oder kontinuierlich erfolgen, bei kontinuierlicher Bewegung wahlweise mit konstanter Geschwindigkeit (abwechselnd in entgegengesetzte Richtungen) oder nichtlinear, z. B. sinusförmig oszillierend.

### Kurze Beschreibung der Zeichnungen

Ein Ausführungsbeispiel der Erfindung ist in den Zeichnungen dargestellt und in der nachfolgenden Beschreibung näher erläutert.

Es zeigen:
- Fig. 1: eine Prinzipskizze des erfindungsgemäßen Radarsensors zusammen mit einem Blockdiagramm einer zugehörigen Steuereinrichtung;
- Fig. 2: den Radarsensor und die Steuereinrichtung nach Fig. 1 in einem anderen Betriebszustand;
- Fig. 3: ein Zeitdiagramm zur Erläuterung der Funktionsweise des Radarsensors in einem ersten Betriebsmodus; und
- Fig. 4: ein Zeitdiagramm für einen anderen Betriebsmodus des Radarsensors.

### Ausführungsform der Erfindung

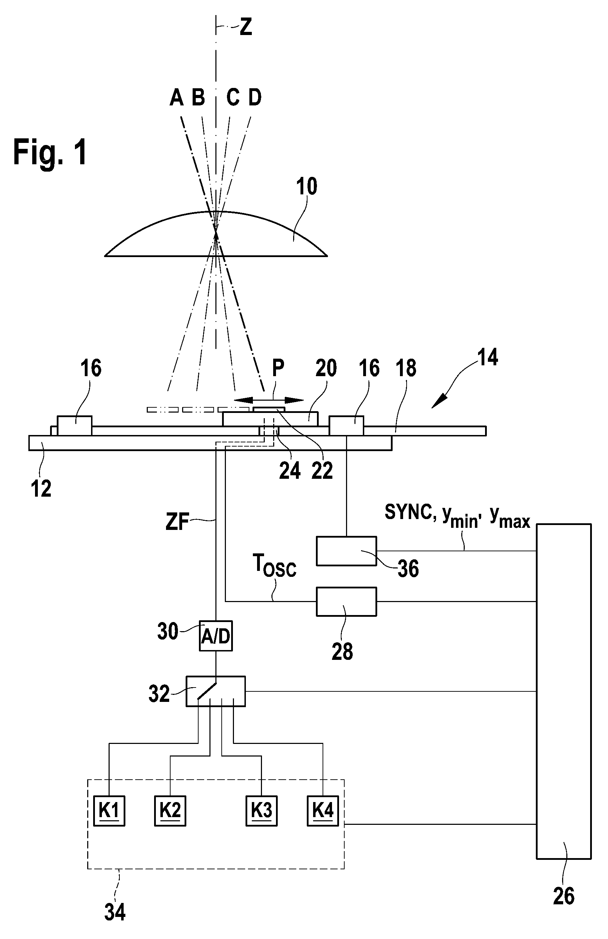

Der in Fig. 1 gezeigte Radarsensor weist eine optische Linse 10 auf, die für Mikrowellen, beispielsweise Radarwellen mit einer Frequenz von 76 GHz brechend ist. In einem Abstand, der annähernd gleich der Brennweite der Linse 10 ist, befindet sich vor der Linse eine Platine 12, die rechtwinklig zur optischen Achse Z der Linse 10 orientiert ist und verschiedene nicht näher gezeigte elektronische Komponenten des Radarsensors trägt. Die Linse 10 und die Platine 12 sind fest in einem gemeinsamen Gehäuse (nicht gezeigt) montiert, das seinerseits fest an der Frontpartie der Karosserie eines Kraftfahrzeugs angebracht und so justiert ist, daß die optische Achse Z in Fahrtrichtung verläuft.

Auf der Platine 12 ist ein piezoelektrischer Linearmotor 14 montiert. Dieser Linearmotor weist im gezeigten Beispiel zweigt Statoren 16 und einen Läufer 18 auf, der waagerecht, parallel zur Ebene der Platine 12, durch die beiden Statoren verläuft und die optische Achse Z der Linse 10 rechtwinklig kreuzt.

Auf dem Läufer 18 sind ein Hochfrequenzmodul 20 und ein Antennenelement 22 montiert, die mit Hilfe des Linearmotors 14 gemeinsam relativ zur optischen Achse Z der Linse 10 bewegt werden können, wie in Fig. 1 durch einen Doppelpfeil P angedeutet wird.

Das Hochfrequenzmodul 20 weist einen Übertrager 24 auf, der der Oberfläche der Platine 12 zugewandt ist und dazu dient, Signale zwischen dem Hochfrequenzmodul und den auf der Platine 12 installierten Komponenten zu übertragen, beispielsweise berührungslos durch induktive oder kapazitive Kopplung.

Das Hochfrequenzmodul 20 enthält in bekannter Weise einen nicht näher gezeigten Oszillator, der das zu sendende Radarsignal erzeugt, sowie einen Mischer, der das empfangene Signal mit einem Anteil des gesendeten Signals zu einem Zwischenfrequenzsignal ZF mischt, das dann durch den Übertrager 24 auf die Schaltungskomponenten auf der Platine 12 übertragen wird.

Das durch den Oszillator erzeugte Radarsignal wird über das Antennenelement 22 abgestrahlt und durch die Linse 10 gebündelt. Wenn sich der Linearmotor 14 in der in Fig. 1 gezeigten Position befindet, so wird die Hauptrichtung des emittierten Radarstrahls durch den Strahl A angegeben. Sofern der Radarstrahl auf ein Objekt trifft und an diesem reflektiert wird, wird ein Teil des reflektierten Signals, das sich längs des Strahls A ausbreitet, wieder von der Linse 10 gesammelt und auf das Antennenelement 22 fokussiert und dort empfangen. Durch den Mischer wird das empfangene Signal dann zu dem Zwischenfrequenzsignal ZF heruntergemischt.

Eine elektronische Steuereinrichtung 26 steuert einen Treiber 28, der seinerseits ein Treibersignal T_{osc} für den Oszillator des Hochfrequenzmoduls 20 erzeugt. Ein Analog/Digital-Wandler 30 befindet sich auf der Platine 12 oder ist an diese angeschlossen und konvertiert das Zwischenfrequenzsignal ZF in einen digitalen Datenstrom. Dieser Datenstrom wird von einem Kanalwähler 32 auf einen von - im gezeigten Beispiel vier - Kanälen K1 - K4 einer Auswerteschaltung 34 geschaltet, die auch Teil der Steuereinrichtung 26 sein kann.

Die Steuereinrichtung 26 steuert außerdem einen Treiber 36 für den Linearmotor 14 und liefert zu diesem Zweck an den Treiber 36 ein Synchronisationssignal SYNC, sowie Begrenzungssignale yₘᵢₙ, yₘₐₓ, die die Positionen angeben, an denen der Läufer 18 seine Bewegungsrichtung umkehrt. Der Treiber 36 steuert die oszillierende Bewegung des Läufers 18 und damit des Antennenelements 22 in Richtung des Doppelpfeils P.

Wahlweise kann der Linearmotor 14 auch mit einem Kodierer ausgestattet sein, der jeweils die aktuelle Position des Läufers 18 über den Treiber 36 an die Steuereinrichtung 26 zurückmeldet.

Die Steuereinrichtung 26 steuert auch den Kanalwähler 32, und zwar synchron mit dem Treiber 36 für den Linearmotor. In dem in Fig. 1 gezeigten Zustand, in dem sich das Antennenelement 22 in der dem Strahl A entsprechenden Position befindet, hat der Kanalwähler 32 den Ausgang des Analog/Digital-Wandlers 30 auf den Kanal K1 der Auswerteschaltung 34 geschaltet.

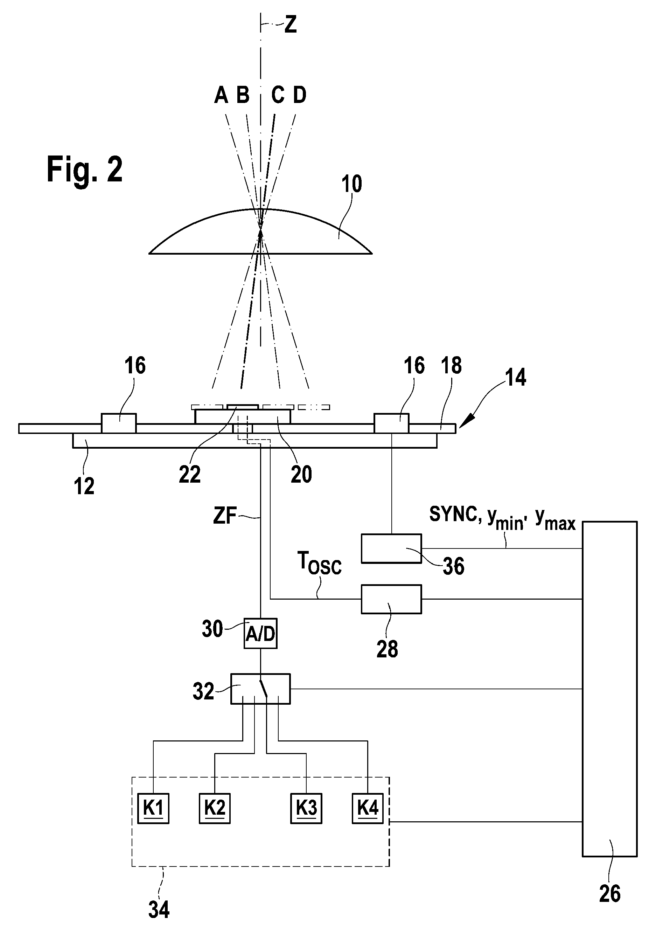

Zum Vergleich zeigt Fig. 2 eine Situation, in der sich das Antennenelement 22 in der dem Strahl C entsprechenden Position befindet. Dementsprechend hat der Kanalwähler 32 den Ausgang des Analog/Digitalwandlers 30 auf den Kanal K3 geschaltet.

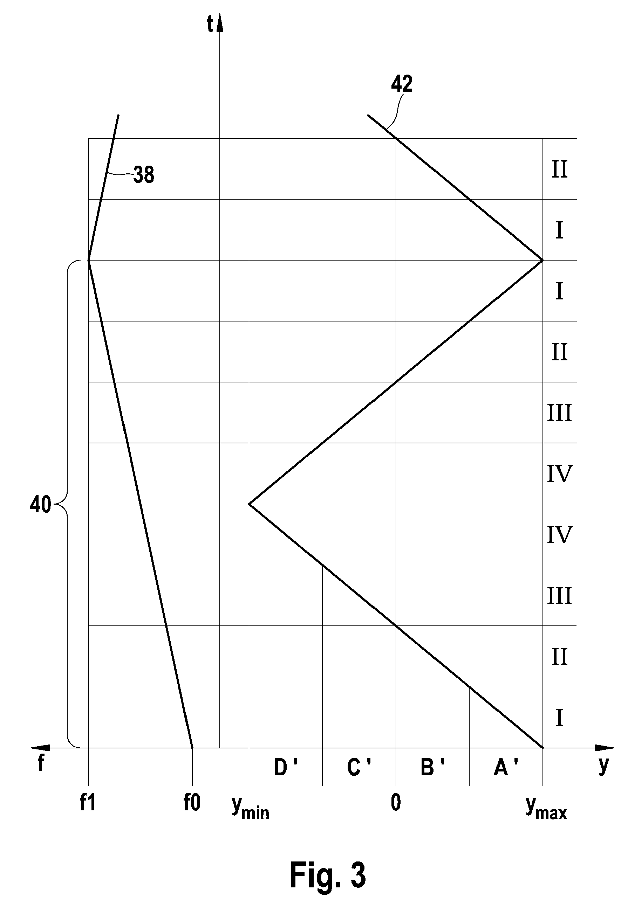

Fig. 3 zeigt ein Zeitdiagramm, anhand dessen die Arbeitsweise des Radarsensors näher erläutert werden soll. Die Zeit t ist auf der vertikalen Achse aufgetragen, und die Kurve 38 gibt die Frequenz f des vom Antennenelement 22 gesendeten Radarsignals an. Man erkennt, daß die Frequenz f rampenförmig moduliert ist. Auf einer ersten Rampe 40 nimmt die Frequenz von einem Basiswert f0 linear auf einen Maximalwert f1 zu. Daran schließt sich eine nicht näher bezeichnete weitere Rampe an, auf der die Frequenz mit entgegengesetzt gleicher Steigung wieder abnimmt. Die Dauer der Rampe 40 beträgt beispielsweise 50 ms.

Die Kurve 42 gibt die durch den Treiber 36 und den Linearmotor 14 gesteuerte Bewegung des Antennenelements 22 an, d. h. die Position y des Elements 22 in Abhängigkeit von der Zeit t. Eine Halbperiode dieser Bewegung, in deren Verlauf sich das Antennenelement von einer Endlage yₘₐₓ zur entgegengesetzten Endlage yₘᵢₙ bewegt, hat im gezeigten Beispiel die Dauer von 25 ms, entsprechend der Hälfte der Dauer der Rampe 40. Somit wird während der Dauer der vollständigen Rampe 40 das gesamte "Gesichtsfeld" des Radarsensors zweimal vollständig abgetastet, ein Mal von links nach rechts (Strahlfolge A-B-C-D) und ein Mal von rechts nach links (Strahlfolge D-C-B-A).

Im gezeigten Beispiel bewegt sich der Linearmotor 14 in jeder Halbperiode mit konstanter Geschwindigkeit, und jede Halbperiode ist in vier gleich lange Phasen I, II, III, und IV aufgeteilt. Jeder diesen Phasen entspricht eine bestimme Zone A', B', C', D' innerhalb des Bewegungsbereiches des Antennenelements 22, und der "Schwerpunkt" jeder dieser Zonen entspricht der Lage eines der Strahlen A, B, C und D in Figuren 1 und 2.

Der Kanalwähler 32 wird während jeder Periode der Kurve 42 so angesteuert, daß der Kanal K1 gewählt ist, so lange sich das Antennenelement in der Zone A' befindet, der Kanal K2 in der Zone B' usw. In der Auswerteschaltung 34 werden die digitalen Daten nach Kanälen getrennt gesampelt, gegebenenfalls über mehrere Halbperioden der Abtastbewegung oder gar über mehrere Modulationszyklen des gesendeten Signals hinweg, und für jede Frequenzrampe und jeden Kanal wird dann durch Schnelle Fourier-Transformation ein Spektrum des Zwischenfrequenzsignals ZF berechnet. In diesem Spektrum zeichnet sich jedes geortete Objekt durch einen Peak bei einer bestimmten Frequenz ab, die vom Abstand dieses Objekts sowie von seiner Relativgeschwindigkeit abhängig ist. Um den Azimutwinkel des Objekts zu bestimmen, können an der Stelle des betreffenden Peaks die Amplituden und Phasen der gesampelten Zwischenfrequenzsignale in den Kanälen K1 bis K4 miteinander verglichen werden. Zwar ist das Antennenelement 22 innerhalb der einzelnen Phasen I - IV nicht stationär, sondern es bewegt sich mit konstanter Geschwindigkeit, doch entspricht die mittlere Position des Antennenelements innerhalb einer einzelnen Phase jeweils der Position eines der Strahlen A, B, C und D. Die Amplituden- und Phasenbeziehungen sind daher ähnlich denjenigen, die man bei einem herkömmlichen Mehrstrahlradar erhalten würde, das vier Strahlen A, B, C und D parallel sendet und empfängt.

Der hier vorgeschlagene Radarsensor hat demgegenüber jedoch den Vorteil, daß sich das durch die Kurve 42 repräsentierte Bewegungsschema des Antennenelements 22 in äußerst flexibler Weise ändern läßt. Dazu braucht lediglich der Treiber 36 in anderer Weise durch die Steuereinrichtung 26 angesteuert zu werden.

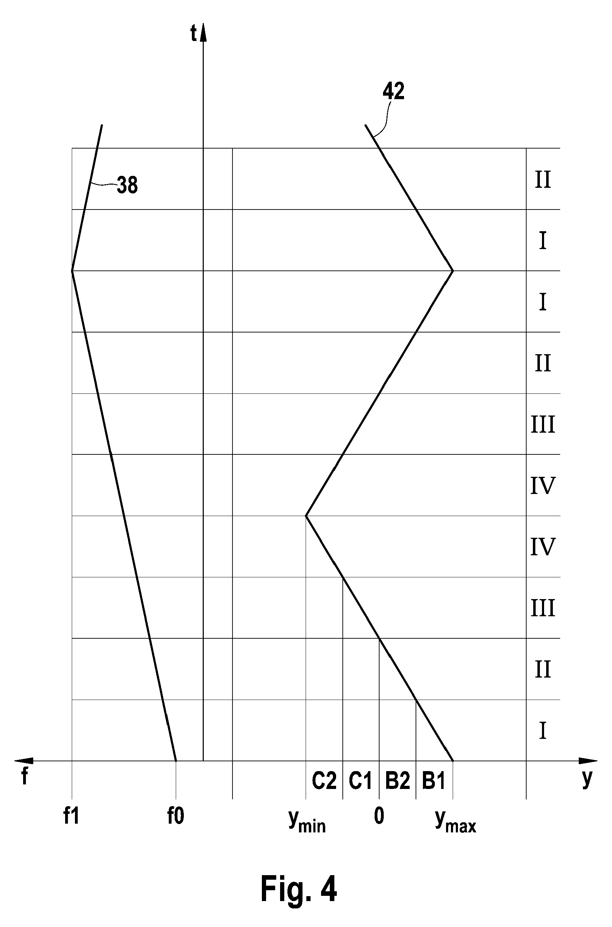

Fig. 4 zeigt ein Beispiel, bei dem die Endlagen yₘᵢₙ und yₘₐₓ des Bewegungsbereiches so verändert wurden, daß die Radarkeule nur noch den Bereich überstreicht, der zwischen den Strahlen B und C in Figuren 1 und 2 liegt. Demgemäß bewegt sich das Antennenelement 22 nur noch in den Zonen, die in Fig. 3 mit B' und C' bezeichnet waren.

Im Prinzip könnte auch die Geschwindigkeit und damit die Abtastperiode des Antennenelements 22 geändert werden. Im gezeigten Beispiel wurde die Abtastperiode jedoch unverändert gelassen, so daß die Synchronisation mit der Frequenzmodulation des Radarsignals erhalten bleibt. In Fig. 4 werden deshalb durch die Phasen I - IV jetzt vier schmalere Zonen B1, B2, C1 und C2 definiert, die den bisherigen Zonen B' und C' entsprechen, jedoch jeweils nur die halbe Breite haben. Der zentrale Teil des Ortungswinkelbereichs wird deshalb jetzt mit höherer Winkelauflösung abgetastet, während eine Abtastung der Randzonen (Zonen A' und D') völlig unterbleibt, so daß beispielsweise störende Signale unterdrückt werden können, die andernfalls von Objekten am Rand des Fahrkorridors empfangen würden.

Selbstverständlich ist es auch möglich, die Grenzen yₘᵢₙ und yₘₐₓ asymmetrisch zu verändern, so daß beispielsweise nur die Zonen A' bis C' in Fig. 3 abgetastet werden, während Störsignale von Objekten am rechten Fahrbahnrand unterdrückt werden. Ebenso wäre es beispielsweise möglich, etwa in einer Linkskurve nur die Zonen A und B und in einer Rechtskurve nur die Zonen C und D abzutasten, um ein vorausfahrendes Fahrzeug, das die Kurve durchfährt, durch Schwenken des Radarstrahls verfolgen zu können.

## Patentansprüche

1. Winkelauflösender Radarsensor mit einer optischen Linse (10) und wenigstens einem in Abstand zu der Linse angeordneten Antennenelement (22), das relativ zu der Linse (10) in einer Richtung (y) quer zur optischen Achse (Z) der Linse beweglich ist, und und mit einer Steuereinrichtung (26, 36, 14) zur Steuerung der Position des Antennenelements (22) **dadurch gekennzeichnet, daß** das wenigstens eine Antennenelement (22) gemeinsam mit einem zugehörigen Hochfrequenzmodul (20), das einen Oszillator, der das zu sendende Radarsignal erzeugt, und einen Mischer, der das empfangene Signal zu einem Zwischenfrequenzsignal mischt, enthält, in der Richtung (y) quer zur optischen Achse der Linse bewegbar ist.

2. Radarsensor nach Anspruch 1, **dadurch gekennzeichnet, daß** er nur ein einziges Antennenelement (22) aufweist.

3. Radarsensor nach einem der vorstehenden Ansprüche, **dadurch gekennzeichnet, daß** das wenistens eine Antennenelement (22) und das Hochfrequenzmodul (20) auf einem Läufer (18) eines Linearmotors (14) montiert sind, der seinerseits auf einer Platine (12) des Radarsensors montiert ist.

4. Radarsensor nach Anspruch 3, **dadurch gekennzeichnet, daß** der Linearmotor (14) ein piezoelektrischer Linearmotor ist.

5. Radarsensor nach einem der vorstehenden Ansprüche, **dadurch gekennzeichnet, daß** die Steuereinrichtung (26, 36, 14) dazu ausgebildet ist, das Bewegungsschema des wenigstens einen Antennenelements (22) zu variieren.

6. Radarsensor nach einem der vorstehenden Ansprüche, **dadurch gekennzeichnet, daß** er nach dem Prinzip eines FMCW-Radar arbeitet und daß die Bewegung des wenigstens einen Antennenelements (22) mit der Frequenzmodulation des Radarsignals synchronisiert ist.

7. Radarsensor nach Anspruch 6, **dadurch gekennzeichnet, daß** die Dauer einer Halbperiode (I-IV) der Bewegung des wenigstens einen Antennenelements (22) kleiner ist als die Dauer einer Modulationsrampe (40) des Radarsignals.

8. Radarsensor nach einem der vorstehenden Ansprüche, mit einer Auswerteschaltung (34) zum Sampeln von empfangenen Radarsignalen über mindestens eine Sampel-Periode hinweg, **dadurch gekennzeichnet, daß** die Auswerteschaltung (34) mehrere Kanäle (K1-K4) aufweist, in denen die Radarsignale getrennt gesampelt werden, und daß ein Kanalwähler (32) dazu vorgesehen ist, das empfangene Radarsignal je nach Position des Antennenelements (22) oder der Antennenelemente auf einen dieser Kanäle zu schalten.

9. Radarsensor nach den Ansprüchen 6 und 8, **dadurch gekennzeichnet, daß** die Auswerteschaltung (34) dazu ausgebildet ist, das empfangene Radarsignal innerhalb jedes Kanals (K1-K4) über mehrere Halbperioden (I-IV) der Bewegung des Antennenelements (22) hinweg zu sampeln.

## Claims

1. Angle-resolving radar sensor comprising an optical lens (10) and at least one antenna element (22) which is arranged at a distance from the lens and which is movable relative to the lens (10) in a direction (y) transversely with respect to the optical axis (Z) of the lens, and comprising a control device (26, 36, 14) for controlling the position of the antenna element (22), **characterized in that** the at least one antenna element (22) together with an associated radio-frequency module (20) containing an oscillator, which generates the radar signal to be transmitted, and a mixer, which mixes the received signal to an intermediate frequency signal, is movable in the direction (y) transversely with respect to the optical axis of the lens.

2. Radar sensor according to Claim 1, **characterized in that** it comprises only a single antenna element (22).

3. Radar sensor according to either of the preceding claims, **characterized in that** the at least one antenna element (22) and the radio-frequency module (20) are mounted on a rotor (18) of a linear motor (14), which for its part is mounted on a circuit board (12) of the radar sensor.

4. Radar sensor according to Claim 3, **characterized in that** the linear motor (14) is a piezoelectric linear motor.

5. Radar sensor according to any of the preceding claims, **characterized in that** the control device (26, 36, 14) is designed to vary the movement scheme of the at least one antenna element (22).

6. Radar sensor according to any of the preceding claims, **characterized in that** it operates according to the principle of an FMCW radar, and **in that** the movement of the at least one antenna element (22) is synchronized with the frequency modulation of the radar signal.

7. Radar sensor according to Claim 6, **characterized in that** the duration of a half-period (I-IV) of the movement of the at least one antenna element (22) is less than the duration of a modulation ramp (40) of the radar signal.

8. Radar sensor according to any of the preceding claims, comprising an evaluation circuit (34) for sampling received radar signals across at least one sampling period, **characterized in that** the evaluation circuit (34) has a plurality of channels (K1-K4) in which the radar signals are sampled separately, and **in that** a channel selector (32) is provided for switching the received radar signal to one of said channels depending on the position of the antenna element (22) or of the antenna elements.

9. Radar sensor according to Claims 6 and 8, **characterized in that** the evaluation circuit (34) is designed to sample the received radar signal within each channel (K1-K4) across a plurality of half-periods (I-IV) of the movement of the antenna element (22).

## Revendications

1. Capteur radar à résolution angulaire avec une lentille (10) optique et au moins un élément d'antenne (22) placé avec un écart par rapport à la lentille, qui est mobile par rapport à la lentille (10) dans une direction (y) à la transversale de l'axe (Z) optique de la lentille et avec un système de commande (26, 36, 14), destiné à commander la position de l'élément d'antenne (22), **caractérisé en ce qu'**en commun avec un module haute fréquence (20) associé qui contient un oscillateur qui génère un signal radar à émettre et un mélangeur qui mélange un signal réceptionné en un signal à fréquence intermédiaire, l'au moins un élément d'antenne (22) est mobile dans la direction (y) à la transversale de l'axe optique de la lentille.

2. Capteur radar selon la revendication 1, **caractérisé en ce qu'**il ne comporte qu'un seul élément d'antenne (22).

3. Capteur radar selon l'une quelconque des revendications précédentes, **caractérisé en ce que** l'au moins un élément d'antenne (22) et le module haute fréquence (20) sont montés sur un induit (18) d'un moteur linéaire (14), qui quant à lui est monté sur une platine (12) du capteur radar.

4. Capteur radar selon la revendication 3, **caractérisé en ce que** le moteur linéaire (14) est un moteur linéaire piézoélectrique.

5. Capteur radar selon l'une quelconque des revendications précédentes, **caractérisé en ce que** le système de commande (26, 36, 14) est conçu pour faire varier le schéma de déplacement de l'au moins un élément d'antenne (22).

6. Capteur radar selon l'une quelconque des revendications précédentes, **caractérisé en ce qu'**il fonctionne selon le principe d'un radar FMCW et **en ce que** le déplacement de l'au moins un élément d'antenne (22) est synchronisé avec la modulation de fréquence du signal radar.

7. Capteur radar selon la revendication 6, **caractérisé en ce que** la durée d'une demi-période (I-IV) du déplacement de l'au moins un élément d'antenne (22) est inférieure à la durée d'une rampe de modulation (40) du signal du radar.

8. Capteur radar selon l'une quelconque des revendications précédentes, avec un circuit d'évaluation (34) destiné à échantillonner des signaux radar réceptionnés sur au moins une période d'échantillonnage, **caractérisé en ce que** le circuit d'évaluation (34) comporte plusieurs canaux (K1 à K4) dans lesquels les signaux radar sont échantillonnés séparément et **en ce qu'**un sélecteur de canal (32) est prévu pour commuter le signal radar réceptionné sur l'un desdits canaux, en fonction de la position de l'élément d'antenne (22) ou des éléments d'antenne.

9. Capteur radar selon les revendications 6 et 8, **caractérisé en ce que** le circuit d'évaluation (34) est conçu pour échantillonner le signal radar réceptionné à l'intérieur de chaque canal (K1 à K4) sur plusieurs demi-périodes (I-IV) du déplacement de l'élément d'antenne (22).
